# EUROPÄISCHE PATENTSCHRIFT

(11) **EP 1 835 706 B1**
(45) Veröffentlichungstag und Bekanntmachung des Hinweises auf die Patenterteilung: **08.02.2012**
(21) Anmeldenummer: 07460005.7
(22) Anmeldetag: 14.03.2007
(51) Int. Cl.: H04M 1/60, B60R 11/02, H04B 1/38

(54) **Gerätehalter mit einem beweglichen Kontaktstecker**
Device holder with a moveable contact plug
Support d'appareil doté d'une prise de contact mobile

(30) Priorität: 17.03.2006 DE 102006012763
(43) Veröffentlichungstag der Anmeldung: 19.09.2007
(73) Patentinhaber: BURY Sp. z o.o., 39-300 Mielec (PL)
(72) Erfinder: Bury, Henryk, 39-300 Mielec (PL)
(74) Vertreter: Kaminski, Zbigniew

(56) Entgegenhaltungen:
- WO-A2-98/28895
- DE-A1- 4 405 506
- DE-A1- 19 942 935
- DE-A1-102004 033 897
- US-A1- 2002 032 041

## Beschreibung

Die Erfindung betrifft einen Gerätehalter für tragbare elektronische Geräte, insbesondere für Mobiltelefone zur Verbindung mit einer Freisprecheinrichtung für Fahrzeuge, mit elektrischen Kontaktanschlüssen an einer Aufnahmeseite des Gerätehalters zur Verbindung mit korrespondierenden Anschlüssen des Mobiltelefons, und mit Halteklauen zum Übergreifen von Abschnitten des elektronischen Gerätes.

Es sind Telefonhalter bekannt, bei denen eine Kontaktbuchse des Telefons auf einen Kontaktstecker in dem Telefonhalter aufgesteckt wird, und das Telefon dann in den Halter eingedrückt wird, wodurch er meist mit seiner oberen Kante eine Rastmechanik betätigt und in der Halterung eingeschnappt wird. Um die Biegebeanspruchung der Kontaktelemente herabzusetzen wurden Halter entwickelt, die geteilt sind und der Kontaktstecker samt eines Teils der Halterung starr in ihr stehend um einen kleinen Winkel aus der Halterung herausgeschwenkt ist. Dadurch kann das Telefon in einer eindimensionalen Bewegung zunächst auf den Kontaktstecker aufgesetzt werden, und erst danach erfolgt die einrastende Bewegung zusammen mit dem drehbar gelagerten Teil der Halterung, bei der die Kontakte nicht mehr beansprucht werden, da sie bereits ineinander gesteckt worden sind. Es ist vorstellbar nach diesem Prinzip sowohl die meist anzutreffende vertikale Anordnung des Telefons vorzusehen, wie auch eine seitliche Lösung, wenn es die Anordnung der Kontaktbuchse seitlich an dem Telefon erforderlich macht. Diesen bekannten Lösungen haftet dennoch die Problematik der mechanischen Beanspruchung der Kontaktelemente an, sowie bei tiefer eingreifenden Kontaktsteckern das wachsende Problem mit der Verkantung des Kontaktsteckers gegenüber der Buchse.

Aus der DE 4405 506 A1 ist eine Halterung für ein Mobiltelefon bekannt, die einen an einem Träger ausschwenkbar gelagerten Köcher aufweist, der eine Klemmeinrichtung zum wahlweisen Festklemmen eines Kabelsteckers hat. Durch Betätigen einer Auslösetaste wird der Köcher in eine angehobene Stellung geschwenkt, in der das Mobiltelefon aus sichernden Halteeinrichtungen gelöst wird und aus der Halterung entnommen werden kann. Der Köcher weist eine Taste auf, mit der die Klemmeinrichtung ausgelöst werden kann, die den Kabelstecker festklemmt, so dass das Mobiltelefon beim Entnehmen aus der Halterung vom Kabelstecker gelöst wird. Die Halterung weist Einrichtungen auf, die beim Wiedereinsetzen des Mobiltelefons in die Halterung und dem anschließenden Einschwenken des Köchers in die Sicherungsstellung die Klemmeinrichtung in ihre Freigabestellung zurückführen.

Ferner ist eine Halterung für ein Mobiltelefon aus der WO 98/28895 bekannt. Diese Halterung ist speziell zur Verbindung eines Mobiltelefons mit einer Freisprecheinrichtung in Fahrzeugen vorgesehen. Die Halterung für eine handfreie Bedienung besteht aus einem stationären Teil und einem beweglichen Teil, welcher relativ zum Basisteil um die Achse der Halterung zwischen geöffneter und geschlossener Position geschwenkt werden kann, wobei der bewegliche Teil in geöffneter Position einen Winkel mit dem stationären Teil bildet und der bewegliche Teil in geschlossener Position parallel zum stationären Teil verläuft. Der bewegliche Teil weist einen Kontaktstecker auf, der nach Aufsetzen des Mobiltelefons die elektrisch Verbindung mit der Freisprecheinrichtung über die korrespondierende Kontaktbuchse des Mobiltelefons automatisch ermöglicht.

Außerdem ist eine Halterung für ein Mobiltelefon aus der US 2002/0032041 A1 bekannt. Diese Halterung ermöglicht den elektrischen Kontakt mit dem Kontaktstecker der Halterung nach Aufsetzen des Mobiltelefons. Der bewegliche Teil der Halterung legt sich formschlüssig in den stationären Teil hinein. Der bewegliche Teil ist auf dem stationären Teil der Halterung angebracht und kann zwischen geschlossener und geöffneter Position eingestellt werden. In geöffneter Position kann das Mobiltelefon in den Hohlraum des beweglichen Teils in Richtung des Kontaktsteckers eingeschoben werden.

Eine weitere bekannte Anordnung eines Telefonhalters löst das gleiche Problem dadurch, dass das in zwei Teile geteilte Gehäuse des Telefonhalters aus ineinander verschiebbaren Teilgehäusen besteht. Wenn der Halter offen ist passt das Telefon seiner Länge nach problemlos hinein und kann auf den Kontaktstecker manuell aufgesteckt werden. Danach braucht man nur noch das eine der beiden verschiebbaren Halterteile manuell zu betätigen und zusammen zu schieben, wodurch eine Rastmechanik den Halter schließt. Hierbei muss der Benutzer manuell dafür sorgen, dass die Kontaktelemente genau genug aufeinander treffen und mit einer weiteren manuellen Bewegung der Halter einrastend geschlossen wird. Fehlbedienungen sind deshalb an der Tagesordnung.

Die Aufgabe der vorliegenden Erfindung ist es deshalb einen wesentlich verbesserten Gerätehalter für tragbare elektronische Geräte, insbesondere für Mobiltelefone, anzubieten, bei dem eine verbesserte Führung, Kontaktierung und Halterung des elektronischen Gerätes sicher gestellt ist, und insbesondere die Kontaktierung der Steckverbindung automatisch und zuverlässig erfolgt.

Die Aufgabe der Erfindung wird in einer ersten vorteilhaften Ausführungsform mit den Merkmalen des Anspruchs 1 gelöst, wobei das elektronische Gerät in eine schalenförmige Lade eingelegt wird, die im geöffneten Zustand des Gerätehalters um einen begrenzten Winkel aus der Halterung herausgeschwenkt ist. Hierfür ist die schalenförmige Lade drehbar um eine Achse gelagert, mit einer Federmechanik nach außen aus der Halterung gedrückt und aus einer Rastmechanik durch Betätigung eines Entriegelungsknopfes zuvor frei zugeben.

Die Schwenkachse des Gerätehalters kann sowohl auf einer langen, meist vertikalen, wie einer kurzen, meist horizontalen, Seite des elektronischen Gerätes liegen, dort wo sich die Kontaktbuchse des Gerätes befindet. In der schwenkbaren Lade ist eine Öffnung vorgesehen, durch die hindurch der korrespondierende Kontaktstecker in die Lade hinein und herausgeführt werden kann. Der Kontaktstecker ist in einen Reiter integriert, der seinerseits ebenso um eine eigene Achse drehbar gelagert ist. Die Drehachsen der Lade und des Reiters verlaufen parallel und in einem Abstand voneinander versetzt, so dass hierdurch der Reiter durch die Drehbewegung der Lade mitgenommen und geführt wird, da er hierzu über eine Gleitschulter verfügt, mit der er in eine Führungsschiene unter dem Boden der Lade eingreift. Aufgrund der Geometrie der Anordnung erfolgt eine relative Bewegung des Reiters entlang des Bodens der Lade, so dass der Kontaktstecker bei herausgeschwenkter Lade in der Seitenwandöffnung der Lade versenkt wird, und beim Schließen der Lade auf seine maximale Länge in die Lade hinein eindringt. Hat man zuvor in geöffneter Stellung der Lade ein elektronisches Gerät eingelegt, so wird beim Schließen der Lade der Kontaktstecker ohne Gefahr einer Verkantung in die Kontaktbuchse des Gerätes genauestens geführt. Eine vorteilhafte Ausführung der Federmechanik ist so gestaltet, dass die Feder den Reiter und die Lade auseinander drückt, da hierdurch die Anzahl benötigter mechanischer Teile reduziert wird.

Zusätzlich zu dem in die Kontaktbuchse des elektronischen Gerätes eingeführten Kontaktstecker halten in den Ecken der schalenförmigen Lade als Flächen ausgebildete Halteklauen das eingelegte elektronische Gerät gegen ein Herausfallen. Damit das eingelegte Gerät auch bei in Fahrzeugen aufkommenden Vibrationen und Erschütterungen nicht herausfällt, wird in einer weiteren vorteilhaften Ausbildung der Erfindung mindestens ein einrastender Riegel auf der gegenüber liegenden Seite des Gerätes gleichzeitig mit der Verriegelungsmechanik des Halters einrasten und das Gerät somit an mindestens einer seiner Kanten umfassen. Der Entriegelungsknopf wirkt beim Entriegeln zugleich auf den Geräteriegel und auf die Rastmechanik der Lade.

Der Anschluss einer externen Antenne an ein Telefon erfolgt über einen der Kontakte in dem Kontaktstecker, oder alternativ über einen zusätzlichen Antennenstecker. Dieser Antennenstecker ist entweder auf der gleichen Seite des Telefons angebracht, oder es ist auf seiner Rückseite, und wird dann beim Einstecken des Telefons in die Lade kontaktiert.

Im Folgenden wird die Erfindung anhand eines vorteilhaften Ausführungsbeispiels dargestellt. Gleiche oder gleich wirkende Teile werden hierbei durch gleiche Bezugszeichen gekennzeichnet.
- Figur 1: zeigt einen Querschnitt durch eine erste vorteilhafte Ausführungsform der Erfindung,
- Figur 2 :: zeigt die Lade mit dem beweglichen Stecker,
- Figur 3- :: die untere Ansicht der Lade,
- Figur 4 :: zeigt den Halter mit eingelegtem Telefon und geschlossener Lade,
- Figur 5 :: zeigt den Halter mit geschlossener Lade,
- Figur 6 :: zeigt den Halter mit eingelegtem Telefon und offener Lade.

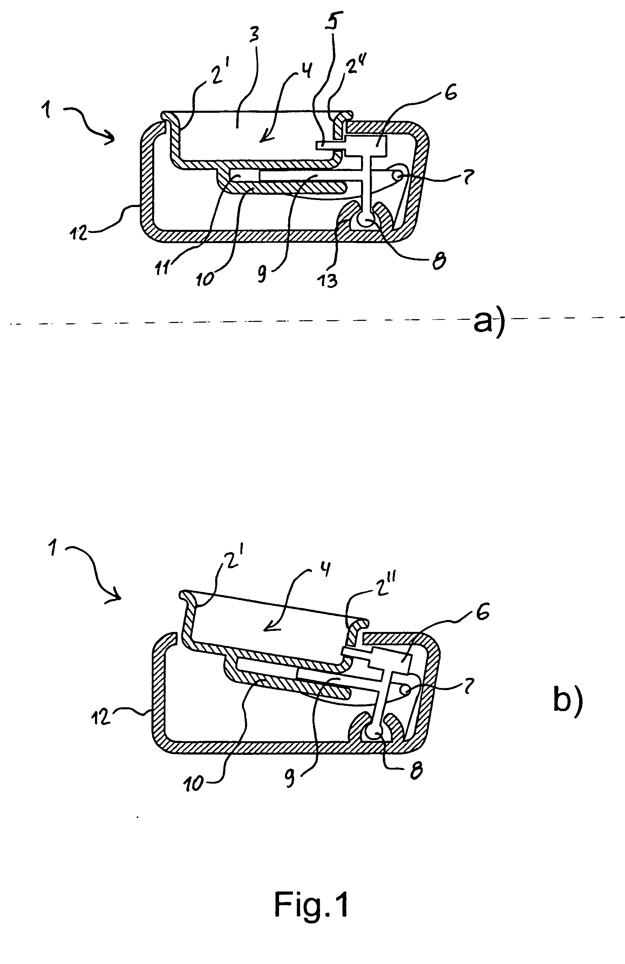

In Figur 1 ist ein Querschnitt durch eine erste vorteilhafte Ausführung der Erfindung abgebildet. Unter a) ist ein Gerätehalter 1 bestehend aus einem Gehäuse 12 und einem im Scharnier 13 gelagerten Reiter 6, der mittels einer mit ihm in einer Einheit ausgebildeten Gleitschulter 9 in einer Führungsschiene 10 in der mittels Ladeachse 7 im Gehäuse 12 drehbar gelagerten Lade 4 geführt ist, zusehen. Die Gleitschiene für die Gleitschulter 9 unter dem Boden der Lade 4 ist mit der Führungsschiene 10 und mit von ihr gebildetem Hohlraum 11 gegeben.

Die Lade 4 ist ihrerseits drehbar in entsprechenden, nicht dargestellten Scharnieren mit ihrer Ladeachse 7 gelagert, und ist hierdurch um einen Winkel aus dem Gehäuse 12 des Gerätehalters 1 heraus schwenkbar. Die Lade 4 ist mit einer nicht dargestellten einfachen Federmechanik aus dem Gehäuse 12 nach außen abgestützt, und wird im geschlossenen Zustand der Lade 4 von einer ebenso nicht dargestellten Verriegelungsmechanik festgehalten.

Unter b) ist der Gerätehalter 1 geöffnet und es ist im Unterschied zur Momentaufnahme unter a) zu sehen, dass im aufgeklappten Zustand der Lade 4 der Reiter 6 mit seiner Gleitschulter 9 aus der Führungsschiene 10 herausgefahren worden ist. Diese Bewegung des Reiters 6 mit dem an ihm angebrachten und elektrisch angeschlossenen Kontaktstecker 5 ist durch die Drehbewegung der Lade 4 angetrieben und ergibt sich aufgrund der Versetzung der Drehachsen des Reiters 6, d.h. der Reiterachse 8, und der Ladeachse 7, sowie der Geometrie der Gleitschulter 9 und der Führungsschiene 10. Der Kontaktstecker 5 ist hierdurch in die Öffnung in der Aufnahmeseite 2" der Lade versunken. In diesem offenen Zustand kann ein Telefon 18 bequem in die Lade 4 eingelegt werden.

Die dargestellte Lösung eignet sich zur Implementierung sowohl für seitlich, als auch für hochkantig einzulegenden Telefone.

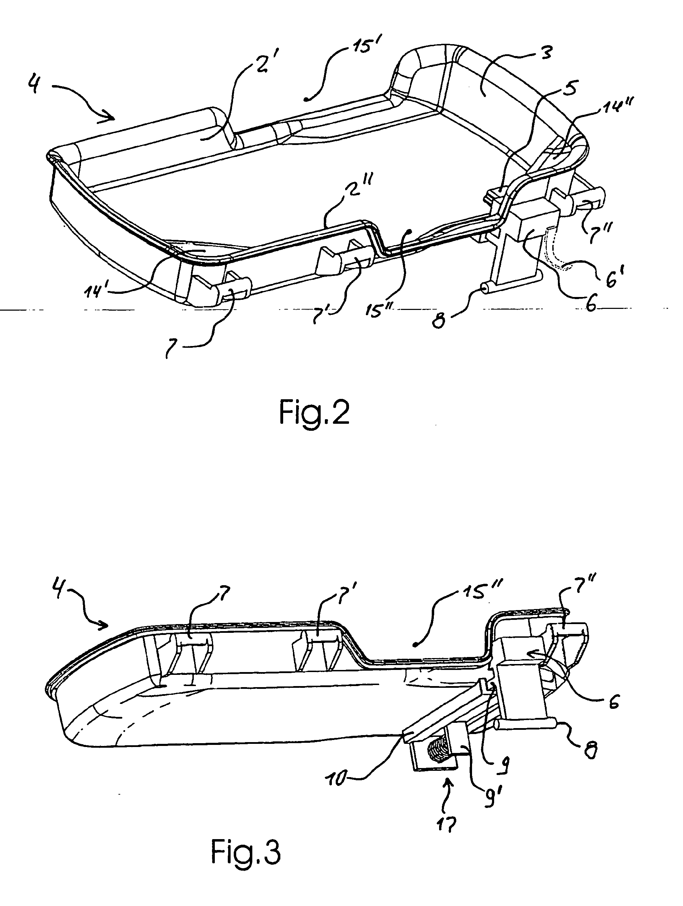

In Figur 2 ist die Lade 4 in einer perspektivischen Ansicht dargestellt. Zu sehen ist, dass die Ladeachse 7 in drei Teilachsen 7, 7' und 7" ausgeführt ist. Ferner sind die Aussparungen 15' und 15" in der Seitenwand 2' und der Aufnahmeseite 2" zu sehen, die es erlauben sollen das Telefon bequem aus der Lade 4 zu entnehmen und einzulegen. Die Halteklauen 14' und 14" sind als parallel zum Boden der Lade 4 angeordneten Flächen ausgebildet und in den Ecken der Lade 4 an der Aufnahmeseite 2" positioniert. Das Telefon 18 wird seitlich unter diese Halteklauen 14' und 14" schräg eingeführt und in den Ecken gegen Herausfallen gehalten.

Das Telefon 18 muss in einer leichten Schräglage bei geöffneter Lade (4) unter die Halteklauen 14' und 14" eingeschoben werden. Drückt der Benutzer die Lade 4 mit dem eingelegten Telefon drehend in das Gehäuse 12 gegen den Widerstand der die Lade 4 abstützenden Federmechanik 17 ins Gehäuse 12 des Gerätehalters 1 hinein, dann fährt der Kontaktstecker 5 sicher und genau ausgerichtet in die Kontaktbuchse des Telefons 18 hinein. Seine Bewegung ist abgeschlossen, wenn die Lade 4 in das Gehäuse 12 versenkt und mittels einer Verriegelungsmechanik fest gehalten wird.

Die Lade 4 ist wannenförmig durch die Seitenwand 2', die Aufnahmeseite 2", die Seitenwand 3 und der ihr gegenüber liegenden Wand, und von einem Boden gebildet.

Der Kabelanschluss 6' sorgt durch die Biegsamkeit des Kabels für die Verbindung zwischen dem im Reiter 6 integrierten Kontaktstecker 5 und einem im Gehäuse 12 untergebrachten Kommunikationsanschluss. Der Kommunikationsanschluss im Gehäuse 12 führt zu einer internen oder externen Elektronik, beispielsweise einer Freisprecheinrichtung.

In Figur 3 ist die Lade 4 in einer perspektivischen Ansicht von unten zu sehen, wobei vor allem eine vorteilhafte Ausführung der Federmechanik 17 zum Vorschein kommt, die dafür sorgt, dass die Lade 4 permanent aus dem Gehäuse 12 heraus gedrückt wird. Die Feder der Federmechanik 17 drückt gegen die Federfläche 9' der Gleitschulter 9 und hierdurch entsteht eine in der Richtung der Führungsschiene 10 wirkende Kraft, die der Lade 4 ständig ein Drehmoment um die Ladeachse 7 mitteilt.

Das Gehäuse 12 bildet hierbei einen Anschlag für die Lade 4, der den Ausschwenkwinkel begrenzt. Die Gleitschulter 9 mit der Federfläche 9' und die Führungsschiene 10 sind hierbei sichtbar an dem Boden der Lade 4 angebracht.

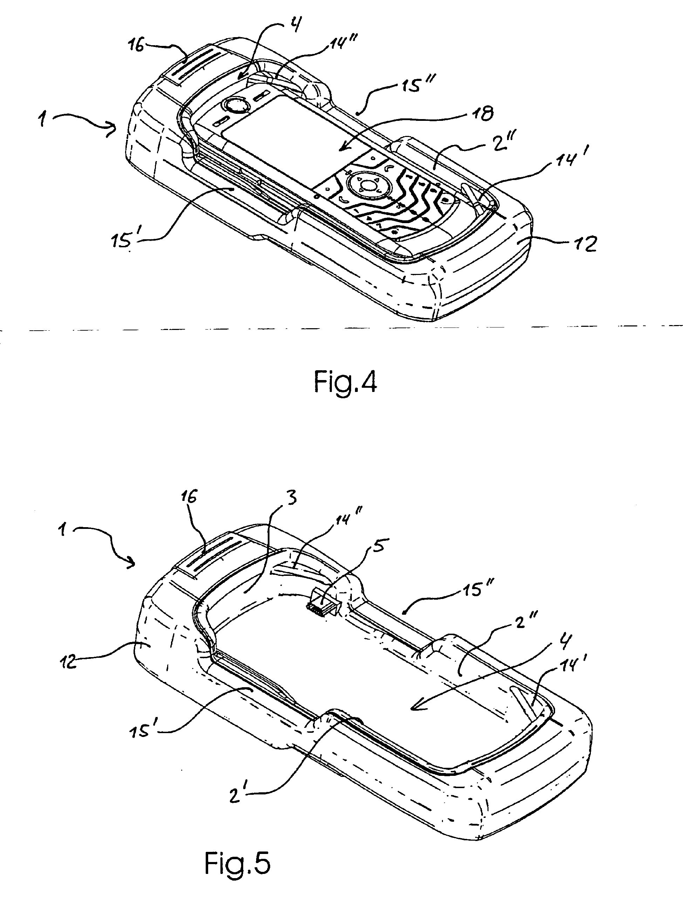

In Figur 4 ist der Gerätehalter 1 mit einem eingelegten Telefon 18 zu sehen. Die Lade 4 ist hierbei in das Gehäuse 12 eingerastet und kann durch Betätigung der Entriegelungstaste 16 frei gegeben werden. Das Telefon 18 ist mit seinen Ecken an der Aufnahmeseite 2" unter die Halteklauen 14' und 14" eingesteckt. Zusätzlich wird das Telefon auch durch den in seine nicht dargestellte seitliche Buchse eingeführten Kontaktstecker 5 gehalten.

In Figur 5 ist der Gerätehalter 1 ohne Telefon mit geschlossener Lade 4 zu sehen, wobei der Kontaktstecker 5 als voll ausgefahren zu sehen ist. Die Aussparungen 15' und 15" sind sowohl in den Seitenwänden der Lade, wie in den Seitenwänden des Gehäuses 12 zwecks Handhabung des Telefons beim Einlegen und Herausnehmen ausgelassen worden.

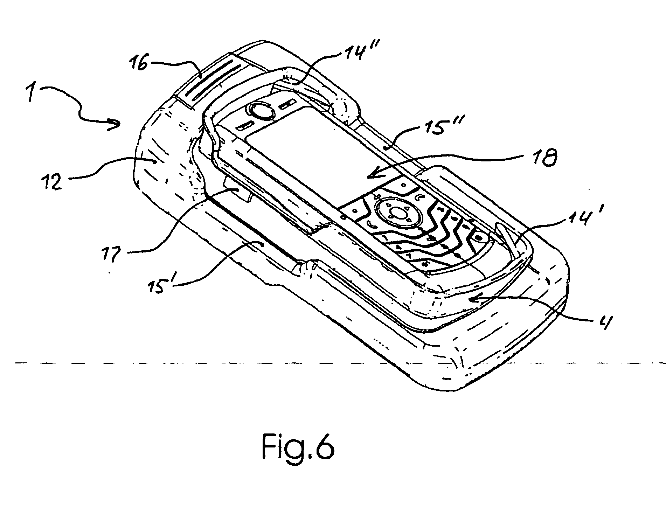

In Figur 6 ist der erfindungsgemässe Gerätehalter 1 mit einem eingelegten Telefon 18 zu sehen, wobei die Lade 4 geöffnet steht. Zu sehen ist unter der Lade 4 teilweise die Federmechanik 17. Das Telefon 18 kann in dieser Position der geöffneten Lade 4 mit den Fingern durch die Aussparungen 15' und 15" gegriffen und etwas drehend unter den Halteklauen 14' und 14" hervorgeholt werden.

### Bezugszeichenliste

- 1: : Gerätehalter
- 2': : Seitenwand
- 2": : Aufnahmeseite
- 3: : Seitenwand
- 4: : Lade
- 5: : Kontaktstecker
- 6: : Reiter
- 6': : Kabelanschluss
- 7: : Ladeachse
- 8: : Reiterachse
- 9: : Gleitschulter
- 9': : Federfläche
- 10: : Führungsschiene
- 11: : Hohlraum
- 12: : Gehäuse
- 13: : Scharnier
- 14' 14": : Halteklauen
- 15' 15": : Aussparung
- 16: : Entriegelungsknopf
- 17: : Federmechanik
- 18: : Telefon

## Patentansprüche

1. Gerätehalter (1) für tragbare elektronische Geräte, und für Telefone (18) zur Verbindung mit einer Freisprecheinrichtung für Kraftfahrzeuge, mit elektrischen Kontaktanschlüssen an einer Aufnahmeseite (2") des Gerätehalters (1) zur Verbindung mit korrespondierenden Anschlüssen des elektronischen Gerätes, mit einer um eine Ladeachse (7) schwenkbaren Lade (4) mit senkrecht zum Boden der Lade (4) stehenden Seitenwänden (2', 3) und mit in den Ecken der Lade ausgebildeten Halteklauen (14', 14") zum Übergreifen von Abschnitten des elektronischen Gerätes, **dadurch gekennzeichnet, dass** die im Gerätehalter (1) schwenkbar gelagerte Lade (4) mindestens einen durch eine Öffnung in der Aufnahmeseite (2") hindurch beweglich gelagerten Kontaktstecker (5) aufweist, der in einem Reiter (6) integriert ist, und der Reiter (6) drehbar im Gehäuse (12) des Gerätehalters (1) gelagert ist, wobei die Reiterachse (8) des Reiters (6) und die Ladeachse (7) im Gehäuse (12) des Gerätehalters (1) parallel und in einem Abstand voneinander versetzt verlaufen, und der Reiter (6) mit einer Gleitschulter (9) in den Hohlraum (11) einer quer zur Ladeachse (7) verlaufenden Führungsschiene (10) unter dem Boden der Lade (4) frei gleitend eingreift und sich entlang des schwenkbaren Bodens der Lade (4) führen lässt.

2. Gerätehalter (1) nach Anspruch 1, **dadurch gekennzeichnet, dass** die Lade (4) eine gegenüber der Aufnahmeseite (2") liegende Seitenwand (2') aufweist, und sie beide je eine Aussparung (15', 15") im mittleren Bereich aufweisen.

3. Gerätehalter (1) nach Anspruch 1, **dadurch gekennzeichnet, dass** der Kontaktstecker (5) mindestens zwei Kontakte aufweist.

4. Gerätehalter (1) nach Anspruch 1, **dadurch gekennzeichnet, dass** die schwenkbare Lade (4) mittels einer Federmechanik (17) aus dem Gehäuse (12) des Gerätehalters (1) herausgeschoben wird.

5. Gerätehalter (1) nach Anspruch 1, **dadurch gekennzeichnet, dass** die Halteklauen (14', 14"), die sich in den Ecken der Lade (4) befinden, als Flächen ausgebildet sind.

6. Gerätehalter (1) nach Anspruch 1, **dadurch gekennzeichnet, dass** in den Seitenwänden des Gehäuses (12) Aussparungen vorgesehen sind, die formschlüssig mit den Aussparungen (15' und 15") der Lade (4) fluchten, wenn diese geschlossen ist.

7. Gerätehalter (1) nach Anspruch 1, **dadurch gekennzeichnet, dass** der Reiter (6) einen Kabelanschluss (6') aufweist, der aus einem biegsamen Kabel gefertigt ist und den Kontaktstecker (5) mit Kontakten im Gehäuse (12) verbindet, die mit einer Elektronik verbunden sind.

8. Gerätehalter (1) nach Anspruch 1, **dadurch gekennzeichnet, dass** die Lade (4) mittels einer Verriegelungsmechanik in dem Gehäuse (12) festgehalten, und mittels eines Entriegelungsknopfes (16) zu entriegeln ist.

9. Gerätehalter (1) nach Anspruch 1, **dadurch gekennzeichnet, dass** das Gehäuse (12) des Gerätehalters (1) einen Anschlag für die in ihm drehbar gelagerte Lade (4) bildet, wodurch der Ausschwenkwinkel der Lade (4) begrenzt ist.

10. Gerätehalter (1) nach Anspruch 1, **dadurch gekennzeichnet, dass** die Lade (4) und das Gehäuse (12) des Gerätehalters (1) eine zusätzliche Verriegelungsmechanik aufweisen, die das Telefon (18) einrastend verriegelt, und die Entriegelung hierfür durch Entriegelungsknopf (16) der Verriegelungsmechanik der Lade (4) erfolgt.

11. Gerätehalter (1) nach einem der vorhergehenden Ansprüche, **dadurch gekennzeichnet, dass** mindestens ein Kontaktanschluss ein Antennenanschluss ist.

## Claims

1. The device holder (1) for portable electronic devices and for phones (18), to be connected to a hands free-speaking-device on motor vehicles, comprising electric contact elements on a receiving side (2") of the device holder (1) to be connected to corresponding contact elements of the electronic device, a drawer (4) swiveling about its axis (7) with side walls (2', 3) standing vertically to the bottom of the drawer (4), and holding dogs (14', 14") formed in the corners of the drawer for reaching the segments of the electronic device, **characterized in that** the drawer (4) swivel-seated in the device holder (1) has at least one contact plug (5) seated movably through a hole in the receiving side (2"), which plug is integrated with a rider (6), und
the rider (6) is seated rotatably in the housing (12) of the device holder (1), with the axis (8) of the rider (6) and the drawer axis (7) in the housing (12) of the device holder (1) being parallel to each other and being displaced from each other by a distance,
and the rider (6) engages freely sliding, by means of a slide-shoulder, into a cavity (11) of the guide-rail (10) running across the drawer axis (7) under the bottom of the drawer (4), and lets itself be guided along the swiveling bottom of the drawer (4).

2. The device holder (1) according to claim 1 **characterized in that** the drawer (4) has a side wall (2') facing the receiving side (2") and both of them have a recess (15', 15") each in their middle areas.

3. The device holder (1) according to claim 1 **characterized in that** the contact plug (5) has at least two contacts.

4. The device holder (1) according to claim 1 **characterized in that** the swiveling drawer (4) is pushed out of the housing (12) of the device holder (1) by means of a spring mechanism (17)

5. The device holder (1) according to claim 1 **characterized in that** the holding dogs (14', 14") which are to be found in the corners of the drawer (4) are formed as surfaces.

6. The device holder (1) according to claim 1 **characterized in that** there are recesses in the side walls of the housing (12) which together with the recesses (15', 15") of the drawer (4) align positive, if the latter is closed.

7. The device holder (1) according to claim 1 **characterized in that** the rider (6) has a cable connector (6'), which is made of a flexible cable and connects the contact plug (5) with contacts in the housing (12), which the contacts are connected to an electronic equipment.

8. The device holder (1) according to claim 1 **characterized in that** the drawer (4) is fixed in the housing (12) by means of a interlocking mechanism and has to be unlocked by means of an unlock button (16).

9. The device holder (1) according to claim 1 **characterized in that** the housing (12) of the device holder (1) represents a stop for the in it swivel- seated drawer (4), whereby the swivel angle of the drawer (4) is limited.

10. The device holder (1) according to claim 1 **characterized in that** the drawer (4) and the housing (12) of the device holder (1) have an additional interlocking mechanism, which snap- locks the phone (18) in place and thereby the unlocking takes place by means of the unlock button (16) of the locking mechanism of the drawer (4).

11. The device holder (1) according to one of the previous claims **characterized in that** at least one contact connector is an aerial connector.

## Revendications

1. Le support (1) aux dispositifs électroniques mobiles et aux téléphones (18)
à connecter au dispositif mains-libres pour la voiture, aux connecteurs électriques du côté de fixation (2") du support pour le montage avec des connecteurs du dispositif électronique appropriés, au petit tiroir (4) tournant autour de son axe (7), aux parois latéraux (2' 3) perpendiculaires au fond du petit tiroir (4), aux griffes de fixation (14', 14") placés aux coins du petit tiroir utilisées pour fixer des éléments du dispositif électronique **caractérisé en ce que** le petit tiroir installé à pivot dans le support (1) est muni au moins d'un connecteur (5) installé d'une manière mobile par un orifice du côté de fixation (2") qui est intégré au cavalier (6) et le cavalier (6) est installé d'une manière mobile dans le corps (12) du support (1) et l'axe du cavalier (8) et du petit tiroir (7) sont installés dans le corps (12) du support (1), déplacés par rapport à eux-mêmes à une distance et le cavalier (6) atteint aisément, par le côté de glissement, l'espace vide du rail de guidage qui court de façon perpendiculaire à l'axe du petit tiroir (7) sous le fond du petit tiroir (4) et peut être installé le long du fond inclinable du petit tiroir (4).

2. Le support (1) selon la revendication 1, **caractérisé en ce que** le petit tiroir est muni d'un paroi latéral (2') à l'opposite du côté de fixation (2") et les deux parois ont une encoche chacun (15', 15") dans la partie centrale.

3. Le support (1) selon la revendication 1, **caractérisé en ce que** le connecteur (5) possède au moins deux contacts.

4. Le support (1) selon la revendication 1, **caractérisé en ce que** le petit tiroir (4) inclinable est coulissant du corps (12) de support (1) à l'aide du mécanisme à ressort (17).

5. Le support (1) selon la revendication 1, **caractérisé en ce que** les griffes (14', 14") qui se trouvent dans les coins du petit tiroir (4) ont une forme plate.

6. Le support (1) selon la revendication 1, **caractérisé en ce qu'**il y a des encoches dans les parois latéraux du corps (12) qui se rattachent aux encoches (15', 15") du petit tiroir (4) lorsqu'il est fermé.

7. Le support (1) selon la revendication 1, **caractérisé en ce que** le cavalier (6) possède une épissure (6'), fait du cable flexible rattachant le connecteur (5) aux contacts dans le corps (12) qui sont connecté(s) au système électronique.

8. Le support (1) selon la revendication 1, **caractérisé en ce que** le petit tiroir (4) est maintenu dans le corps (12) à l'aide du mécanisme de blocage et peut être décoincer par le bouton de déblocage (16).

9. Le support (1) selon la revendication 1, **caractérisé en ce que** le corps (12) de support (1) constitue une limitation au petit tiroir (4) y installé à pivot ce qui fait que l'angle de braquage du petit tiroir (4) est limité.

10. Le support (1) selon la revendication 1, **caractérisé en ce que** le petit tiroir (4) et le corps (12) de support possèdent mécanisme de blocage supplémentaire qui fixe le téléphone à cliquet (18) et le déblocage se fait à l'aide du bouton (16) de mécanisme de blocage du petit tiroir (4).

11. Le support (1) selon l'une des revendications ci-dessus, **caractérisé en ce qu'**au moins un raccord d'aboutement est un raccord d'antenne.
